# EUROPÄISCHE PATENTSCHRIFT

(11) **EP 2 765 151 B1**
(45) Veröffentlichungstag und Bekanntmachung des Hinweises auf die Patenterteilung: **19.10.2016**
(21) Anmeldenummer: 14166556.2
(22) Anmeldetag: 11.05.2011
(51) Int. Cl.: C08G 65/00

(54) **Verfahren zur Herstellung von Polyetherolen**
Method for the production of polyetherols
Procédé destiné à la fabrication de polyétherols

(30) Priorität: 14.05.2010 EP 10162850
(43) Veröffentlichungstag der Anmeldung: 13.08.2014
(62) Teilanmeldung aus: 11718752.6
(73) Patentinhaber: BASF SE, 67056 Ludwigshafen am Rhein (DE)
(72) Erfinder: Deglmann, Peter, 68163 Mannheim (DE); Zarbakhsh, Sirus, 67063 Ludwigshafen (DE); Löffler, Achim, 67346 Speyer (DE); Wiss, Kerstin, 67056 Ludwigshafen (DE)
(74) Vertreter: BASF IP Association

(56) Entgegenhaltungen:
- EP-A1- 2 110 397
- EP-A2- 0 950 679
- WO-A1-00/78837
- WO-A1-2009/013344
- US-A- 4 833 176
- US-A- 5 001 165
- US-A1- 2003 036 578
- ANDREW F MASON ET AL: "ORGANOCATALYTIC POLYMERIZATION OF ETHYLENE OXIDE AND THE CONTROLLED SYNTHESIS OF PEO-BASED HYDROGEL NETWORKS", POLYMER PREPRINTS, AMERICAN CHEMICAL SOCIETY, US, Bd. 47, 1. Januar 2006 (2006-01-01), Seiten 99-100, XP009094768, ISSN: 0032-3934

## Beschreibung

Die vorliegende Erfindung betrifft ein Verfahren zur Herstellung von Polyetherolen, insbesondere Polyetherol-Blockstrukturen..

### Hintergrund

Im Rahmen der vorliegenden Offenbarung werden die Begriffe "Polyetheralkohol" und "Polyetherol" synonym verwendet.

Die Herstellung von Polyetheralkoholen durch anionische ringöffnende Polymerisation von Alkylenoxiden ist seit langem bekannt.

Näheres hierzu kann beispielsweise dem Kunststoffhandbuch, Band VII, Polyurethane, Carl-Hanser-Verlag, München, 1. Auflage 1966, herausgegeben von Dr. R. Vieweg und Dr. A. Höchtlen, sowie 2. Auflage 1983 und 3. Auflage 1993, herausgegeben von Dr. G. Oertel, entnommen werden, oder M. Szycher, Szycher's Handbook of Polyurethanes, CRC Press, New York 1999, Kap. 5 "Polyols" entnommen werden.

Die Anlagerung der Alkylenoxide erfolgt üblicherweise unter Verwendung von Katalysatoren. Hierfür werden in der Technik überwiegend basische, und hierbei insbesondere alkalische Katalysatoren eingesetzt.

Basische Verbindungen, wie Alkali- und Erdalkali-Hydroxide zählen bei der Herstellung von Polyetheralkoholen zu den Standard-Katalysatoren; Kaliumhydroxid (KOH) ist der am meisten verwendete.

Die Herstellung von Polyetheralkoholen ist auch in M. Ionescu, "Chemistry and Technology of Polyols for Polyurethanes", Rapra Technology, 2005 beschrieben.

Häufig verwendete Alkylenoxid-Ausgangsprodukte für die Herstellung von Polyetheralkoholen sind Propylenoxid (PO) und/oder Ethylenoxid (EO).

Polyetheralkohole (Polyetherole) sind häufig verwendete Ausgangsprodukte zur Herstellung von Polyurethanen (PU). Da die Art des verwendeten Polyetherols dabei einen großen Einfluss auf die Eigenschaften des Polyurethan-Produkts hat, ist es von großer Bedeutung, Polyetherole mit definierten Eigenschaften herzustellen, je nach Art des gewünschten Polyurethans. Es ist daher auch oftmals nötig, Polyetherole mit Blockstrukturen herzustellen, zum Beispiel Polyetherole mit einem Kemblock (core) aus PO und einem Endblock (cap) aus EO.

Ein hoher Anteil an EO im Endblock ist dabei bei vielen Anwendungen, zum Beispiel bei der Herstellung von Polyurethanen, erwünscht, da EO als Edukt bei der Herstellung von Polyetherolen im Polyetherol primäre OH-Gruppen liefert, was die Reaktivität des Polyetherols in der Urethanisierung erhöht.

Wie erwähnt, erfolgt die Anlagerung der cyclischen Alkylenoxide, zum Beispiel an OH-Gruppen enthaltende Verbindungen, üblicherweise unter Verwendung von Katalysatoren.
Organokatalysatoren zur ringöffnenden Polymerisation von Alkylenoxiden werden ausführlich im Buch von lonescu diskutiert (M. Ionescu, Chemistry and Technology of Polyols for Polyurethanes, Rapra Technology, 2005). Dabei handelt es sich ausschließlich um N-Nukleophile, welche in der EO-Homopolymerisation zu ordentlichen Umsätzen führen, bei Propylenoxid (PO) und anderen substituierten Monomeren jedoch lediglich die Herstellung von niedermolekularen Oligomeren erlauben (<5 PO pro OH-Gruppe des Starters). Daher ist es mit diesen Aminkatalysatoren auch nicht möglich, Blockcopolymere herzustellen, welche aus einem Core (Kernblock) von substituierten Alkylenoxiden (z. B. Propylenoxid oder Butylenoxid) und einem Cap (Endblock) aus EO bestehen.

Das zuletzt genannte Capping von z.B. Polypropylenoxid (PPO)-Blöcken mit einem geringen Anteil von EO, also das Anfügen eines Polyethylenoxid-Blocks an einen Polypropylenoxid-Block, ist in wohldefinierter Weise auch mit anderen etablierten Alkoxilierungskatalysatoren, wie DMC (Doppelmetallcyanid), nicht durchführbar. Mit KOH als Katalysator ist dies möglich, jedoch muss das Produkt danach noch aufwendig aufgearbeitet werden.

Als weitere Klasse von Katalysatoren sind N-Heterocyclische Carbene (NHC) seit einigen Jahren als Initiatoren bzw. Organokatalysatoren für die ringöffnende Polymerisation bekannt (Dove et al., Polymer 47 (2006), 4018). Kürzlich wurde auch von Raynaud et al. (JACS, 131 (2009), 3201) die stöchiometrische Ringöffnung von Ethylenoxid (EO) in Lösung beschrieben, wobei nach langen Reaktionszeiten zwitterionische PEG (Polyethylenglykol-)-Oligomere entstehen. Diese werden beim Quenchen des Reaktionsgemisches mit Wasser zu Diolen umgesetzt; alternativ können durch Übertragung der PEG-Ketten auf Nucleophile auch andere terminale Funktionalitäten eingestellt werden (z.B. Benzylester beim Quenchen mit Benzylalkohol, Azide beim Quenchen mit Trimethylsilylazid). Die gleiche Vorgehensweise wird von denselben Autoren auch in der Patentanmeldung WO2009/013344 beschrieben, wobei als Monomere alle technisch relevanten Alkylenoxide sowie als Katalysatoren alle gängigen Carbenstrukturen beansprucht werden. Konkrete Ausführungsbeispiele sind jedoch nur für EO angegeben. Allerdings wurde die katalytische Ringöffungspolymerisation von Ethylenoxid bereits drei Jahre zuvor durch Mason et al. beschrieben (Polym. Prepr., Am. Chem. Soc., Div. Polym. Chem., 2006, 47, 99-100).

Es stellte sich somit die Aufgabe, ein Verfahren zur Herstellung von Polyetherolen bereitzustellen, das sich insbesondere zur Herstellung von Blockstrukturen eignet und möglichst ein EO-Capping gestattet.

Zudem sollte das Verfahren möglichst wenige Nebenreaktionen aufweisen und möglichst einfach durchzuführen sein, sowie möglichst schnell ablaufen. Die Produkte des Verfahrens, also die Polyetherole, sollten sich gut zur Herstellung von Polyurethanen (PU) eignen.

### Beschreibung der Erfindung

Es wurde nun überraschenderweise gefunden, dass durch katalytische ringöffnende Polymerisation von Alkylenoxiden unter Einsatz mindestens eines N-heterocyclischen Carbens als Katalysator die oben erwähnte Aufgabe gelöst werden konnte.

Der Gegenstand der vorliegenden Erfindung ist somit ein Verfahren zur Herstellung von Polyetherolen durch katalytische ringöffnende Polymerisation von Propylenoxid mit wenigstens einer wenigstens difunktionellen Verbindung, die mit Alkylenoxiden reaktiv ist, wobei mindestens ein N-heterocyclisches Carben als Katalysator zum Einsatz kommt.

Der erfindungsgemäße Einsatz eines N-heterocyclischen Carbens als Katalysator für die katalytische ringöffnende Polymerisation von Propylenoxid ermöglicht unter anderem die Herstellung hochmolekularer Blockcopolymer-Polyetherole, zum Beispiel mit EO-Endcaps. Die auf diese Weise hergestellten Polyetherole sind durch ihre hohe Reaktivität aufgrund der primären OH-Gruppen ausgezeichnet geeignet für eine weitere Umsetzung zu Polyurethanen, zum Beispiel zur Anwendung als Formweichschäume.

Der Umfang der beim Einsatz von Propylenoxid auftretenden Nebenreaktionen, wie die Bildung ungesättigter Nebenprodukte wie Allylalkoholen, wird bei Anwendung des erfindungsgemäßen Verfahrens im Vergleich zu konventionellen Verfahren, wie der KOH-Katalyse, deutlich reduziert.

Ein weiterer Vorteil des erfindungsgemäßen Verfahrens liegt darin, dass die Aufarbeitungsschritte der Neutralisation und Filtration, die bei der KOH-katalysierten Herstellung von Polyetherolen nötig sind, entfallen.

Außerdem sind bei Anwendung des erfindungsgemäßen Verfahrens in der Regel niedrigere Katalysatorkonzentrationen nötig als beim konventionellen KOH-katalysierten Verfahren, und die Reaktionstemperaturen sind in der Regel niedriger. Das bedeutet, dass die Aktivität des erfindungsgemäßen Katalysators deutlich höher ist als die der konventionellen Katalysatoren, wie KOH- oder Aminkatalysatoren.

Weiterhin ist die Viskosität des Reaktionsgemischs bei Anwendung des erfindungsgemäßen Verfahrens in der Regel niedriger als diejenige beim konventionellen KOH-katalysierten Verfahren, was eine bessere Abfuhr der Reaktionswärme ermöglicht.

Und schließlich kann, bei Weiterverarbeitung des erfindungsgemäß hergestellten Polyetherols zu Polyurethanen, die Reaktivität (Aushärtezeit) des so erhältlichen Polyurethans in weiten Grenzen eingestellt werden. Dies rührt daher, dass der erfindungsgemäße NHC-Katalysator auch als Katalysator für die Polyurethanherstellung verwendet werden kann; falls der erfindungsgemäße NHC-Katalysator am Ende des erfindungsgemäßen Verfahrens nicht gequencht wird und somit im Polyetherol-Produkt verbleibt, kann folglich die Reaktivität des Polyols in einem Verfahren zur Herstellung von PU erhöht (oder die Menge an regulärem PU-Katalysator verringert) werden. Hierbei bedeutet der Begriff "Quenching" die Deaktivierung des Katalysators durch chemische Umsetzung, z. B. durch Hydrolyse oder Oxidation.

Somit bietet das erfindungsgemäße Verfahren zur Herstellung von Polyetherolen unter Einsatz eines N-heterocyclischen Carbens als Katalysator für die katalytische ringöffnende Polymerisation von Propylenoxid zahlreiche Vorteile gegenüber den etablierten Verfahren.

Es wurde somit eine neue, hoch aktive Katalysatorklasse für die Ringöffnungspolymerisation von Propylenoxid gefunden. Auch die Copolymerisation, zum Beispiel mit Lactonen, Lactid und/oder cyclischen Siloxanen, ist mit dem erfindungsgemäßen Katalysator möglich.

Beispiele geeigneter Lactone für die Copolymerisation mit Alkylenoxiden sind substitutuierte oder unsubstitutierte Lactone mit 4-gliedrigen oder größeren Ringen, wie beispielsweise β-Propiolacton, δ-Valerolacton, ε-Caprolacton, Methyl-ε-caprolacton, β,β-Dimethyl-β-propiolacton, β-Methyl-β-propiolacton, α-Methyl-β-Propiolacton, α,α-Bis(chlormethyl)-propiolacton, Methyoxy-ε-caprolacton, Ethoxy-ε-caprolacton, Cyclohexyl-ε-caprolacton, Phenyl-ε-caprolacton, Benzyl-ε-caprolacton, ζ-Enantholacton, η-Caprylolacton, α,β,γ-Trimethoxy-δ-valerolacton, oder β-Butyrolactone, und Mischungen daraus. In einer Ausführungsform wird ε-Caprolacton verwendet.

Durch die hohe Aktivität des Katalysators ist es möglich, mit Propylenoxid hohe Alkoxilierungsgrade zu erreichen.

Die Polyetherol-Produkte können zum Beispiel eingesetzt werden als Bestandteil der A-Komponente von PU-Systemen für Weichschaumanwendungen (Blockweichschaum, Formweichschaum), für Hartschaumanwendungen und für Elastomere, Coatings und Klebstoffe, als Trägeröle sowie als oberflächenaktive Substanzen für Kosmetik- und Haushaltschemikalien sowie für die Bauchemie.

Es konnte gezeigt werden, dass die Reaktion von PO mit katalytischen Mengen NHC in Gegenwart eines OH-gruppenhaltigen Starters zu Polyalkylenoxid mit enger Massenverteilung führt, wie aus Polydispersitätsdaten zu erkennen ist (siehe Beispiel 2).

Ebenfalls wurde überraschenderweise gefunden, dass NHCs im Gegensatz zu anderen Organokatalysatoren in der Lage sind, das monosubstituierte Alkylenoxid Propylenoxid in genauso katalytischer wie stöchiometrischer Reaktion nicht nur zu Oligomeren, sondern auch zu den entsprechenden Polyetherolen (mit hohem M_{w}, zum Beispiel bis zu 12.000 g/mol) umzusetzen.

Ebenfalls ist es mit NHC-Katalysatoren damit erstmals möglich, statistische sowie Block-Copolymere aus den oben genannten Monomeren zu erhalten, insbesondere EO-gecappte PPG-cores.

Bevorzugt wird ein erfindungsgemäßer Katalysator verwendet.

Der erfindungsgemäße Katalysator wird bevorzugt ausgewählt aus der Gruppe umfassend: 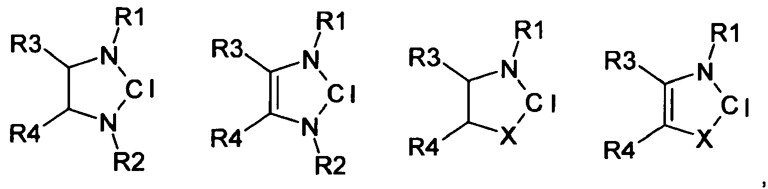 und 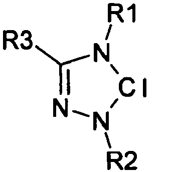 Dabei gilt: X ist ausgewählt aus der Gruppe umfassend O und S; R1 ist ausgewählt aus der Gruppe umfassend Alkyl, Aryl; R2, falls vorhanden, ist ebenfalls ausgewählt aus der Gruppe umfassend Alkyl, Aryl; R3 und R4 sind jeweils ausgewählt aus der Gruppe umfassend H, Alkyl, Aryl.

Ebenso sind auch Ringschlüsse zwischen R1 und R3, R3 und R4 sowie R4 und R2 möglich.

Dabei werden die Alkylgruppen bevorzugt jeweils ausgewählt aus der Gruppe umfassend Methyl, Ethyl, Propyl, Butyl, Pentyl, Hexyl, Heptyl, Octyl, besonders bevorzugt Methyl, Ethyl, iso-Propyl, tert-Butyl.

Die Arylgruppen werden bevorzugt jeweils ausgewählt aus der Gruppe umfassend Phenyl und Mesityl.

Falls der Rest R2 nicht vorhanden ist, ist R1 bevorzugt eine sekundäre oder tertiäre Alkyl- oder Mesitylgruppe, besonders bevorzugt eine tertiäre Alkylgruppe.

Im Falle, dass beide Gruppen R1 und R2 vorhanden sind, ist bevorzugt wenigstens einer der beiden Reste R1 und R2 eine primäre Alkylgruppe, wie zum Beispiel Methyl, Ethyl, n-Propyl oder n-Butyl.

Ebenfalls bevorzugt ist im Falle, dass beide Gruppen R1 und R2 vorhanden sind, wenigstens einer der beiden Reste R1 und R2 eine sekundäre Alkylgruppe, wie zum Beispiel iso-Propyl.

In einer bevorzugten Ausführungsform der Erfindung, in der beide Gruppen R1 und R2 vorhanden sind, sind beide Reste R1 und R2 sekundäre Alkylgruppen.

In einer weiteren bevorzugten Ausführungsform der Erfindung, in der beide Gruppen R1 und R2 vorhanden sind, ist einer der beiden Reste R1 und R2 eine primäre Alkylgruppe, und der andere der beiden Reste ist eine sekundäre Alkylgruppe.

Besonders bevorzugt sind in einer Ausführungsform der Erfindung, in der beide Gruppen R1 und R2 vorhanden, beide Reste R1 und R2 jeweils primäre Alkylgruppen.

Bevorzugt sind auch folgende Strukturen: 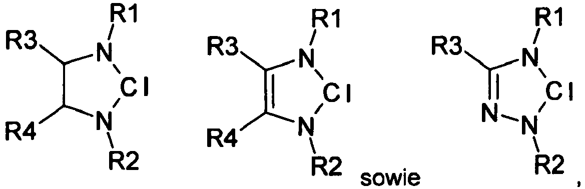 wobei R1, R2, R3, R4 in allgemeiner Form und in bevorzugter Form wie oben definiert sind.

In einer bevorzugten Ausführungsform der Erfindung wird der folgende Katalysator: 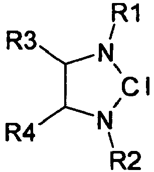 verwendet, wobei R1, R2, R3, R4 in allgemeiner Form und in bevorzugter Form wie oben definiert sind.
Bevorzugt ist somit wenigstens einer der beiden Reste R1 und R2 eine primäre Alkylgruppe; ebenfalls bevorzugt ist wenigstens einer der beiden Reste R1 und R2 eine sekundäre Alkylgruppe. Besonders bevorzugt sind beide Reste R1 und R2 jeweils primäre Alkylgruppen.

In einer anderen bevorzugten Ausführungsform der Erfindung wird der folgende Katalysator: 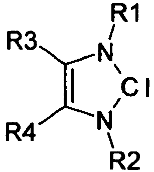 verwendet, wobei R1, R2, R3, R4 in allgemeiner Form und in bevorzugter Form wie oben definiert sind.
Bevorzugt ist somit wenigstens einer der beiden Reste R1 und R2 eine primäre Alkylgruppe; ebenfalls bevorzugt ist wenigstens einer der beiden Reste R1 und R2 eine sekundäre Alkylgruppe. Besonders bevorzugt sind beide Reste R1 und R2 jeweils primäre Alkylgruppen.

In einer weiteren bevorzugten Ausführungsform der Erfindung wird der folgende Katalysator: 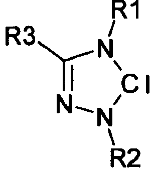 verwendet, wobei R1, R2, R3, R4 in allgemeiner Form und in bevorzugter Form wie oben definiert sind.

Bevorzugt ist somit wenigstens einer der beiden Reste R1 und R2 eine primäre Alkylgruppe; ebenfalls bevorzugt ist wenigstens einer der beiden Reste R1 und R2 eine sekundäre Alkylgruppe. Besonders bevorzugt sind beide Reste R1 und R2 jeweils primäre Alkylgruppen.

Üblicherweise wird der erfindungsgemäße Katalysator in einer Menge von 0,001 bis 1,5 Gew.%, bevorzugt in einer Menge von 0,01 bis 1,0 Gew.%, besonders bevorzugt in einer Menge von 0,1 bis 0,7 Gew.%, bezogen auf die Menge an Starter plus Alkylenoxid(en), eingesetzt.

Es kann auch ein Gemisch verschiedener erfindungsgemäßer Katalysatoren verwendet werden, oder ein Gemisch erfindungsgemäßer Katalysatoren mit konventionellen Katalysatoren.

Die wenigstens difunktionelle Verbindung, die mit Alkylenoxiden reaktiv ist, wird im Rahmen der vorliegenden Erfindung auch als Starter bezeichnet.

Die wenigstens difunktionelle Verbindung, die mit Alkylenoxiden reaktiv ist, wird in einer bevorzugten Ausführungsform ausgewählt aus der Gruppe umfassend Polyole, insbesondere Glycerin, Ethylenglycol, Diethylenglycol, Propylenglycol, Dipropylenglycol, Pentaerythrit, Sorbitol, Saccharose, C₁- bis C₁₈-Diole, Rizinusöl, epoxydierte und ringgeöffnete Fettsäuren, Trimethylolpropan, Zuckerverbindungen wie beispielsweise Glucose, Sorbit, Mannit und Saccharose, mehrwertige Phenole, Resole, wie z. B. oligomere Kondensationsprodukte aus Phenol und Formaldehyd und Mannich-Kondensate aus Phenolen, Formaldehyd, Dialkanolaminen, Melamin, sowie Mischungen aus mindestens zwei der aufgeführten Verbindungen.

Ebenfalls können, im Gegensatz zu DMC-katalysierten Verfahren, Amine oder Aminoalkohole als Starterkomponenten eingesetzt werden.

Bevorzugt werden Verbindungen aus der Gruppe umfassend Hexamethylendiamin, Ethylendiamin, Propylendiamin, Orthocyclohexandiamin, Aminocyclohexanalkylamin, und aromatische Amine ausgewählt aus der Gruppe enthaltend Toluoldiamin (TDA), Diphenylmethandiamin (MDA) oder polymeres MDA (p-MDA), eingesetzt. Im Falle von TDA werden insbesondere die 2,3- und 3,4-Isomere, auch als vicinales TDA bezeichnet, eingesetzt.

Die Anlagerung des Propylenoxids wird bevorzugt bei einer Temperatur zwischen 60 und 150 °C, besonders bevorzugt bei 80-130°C, und ganz besonders bevorzugt bei 90-120°C, und einem Druck zwischen 0,1 bis 9 bar durchgeführt.

Nach Abschluss der Dosierung des Propylenoxids schließt sich üblicherweise eine Nachreaktionsphase an, in der das Propylenoxid abreagiert. Es folgt üblicherweise eine Aufarbeitung des Reaktionsprodukts, beispielsweise durch eine Destillation zur Abtrennung leicht flüchtiger Bestandteile, die vorzugsweise unter Vakuum durchgeführt wird; die bei KOH-katalysierten Verfahren übliche aufwändige weitere Aufarbeitung durch Neutralisation des Katalysators und Filtration des dadurch erhaltenen Salzes entfällt. Weiterhin kann während, vor oder nach der Destillation auch mit Inertgas oder Dampf gestrippt werden. Die Strippung findet in der Regel in einem Temperaturbereich von 60-150°C und einem Druckbereich von 15-1013 mbar statt. Das Inertgas oder der Dampf wird üblicherweise mit 1-1900 kg/m³/h eingeleitet. Die Volumenangabe bezieht sich auf das Reaktorvolumen.

Optional wird der erfindungsgemäße Katalysator dann gequencht, zum Beispiel durch Oxidation oder Hydrolyse.

Zudem ist ein weiterer Gegenstand der Erfindung ein Verfahren zur Herstellung von Polyetherolen, wie oben definiert, wobei das Polyetherol mit einem EO-Endcap versehen wird.

Weiterhin wird in dieser Offenbarung ein Verfahren zur Herstellung eines Polyurethans beschrieben, durch Umsetzung eines nach dem erfindungsgemäßen Verfahren herstellbaren Polyetherpolyols mit einem oder mehreren organischen Diisocyanaten (oder Polyisocyanaten).

Die Herstellung der Polyurethane kann nach den bekannten Verfahren, diskontinuierlich oder kontinuierlich, beispielsweise mit Reaktionsextrudern oder dem Bandverfahren nach "one-shot" oder dem Prepolymerverfahren (auch mehrstufige Prepolymerverfahren wie in US6790916B2, bevorzugt nach dem "one-shot"-Verfahren erfolgen. Bei diesen Verfahren können die zur Reaktion kommenden Komponenten Polyesterol, Kettenverlängerer, Isocyanat und gegebenenfalls Hilfsstoffe und Additive (insbesondere UV-Stabilisatoren) nacheinander oder gleichzeitig miteinander vermischt werden, wobei die Reaktion unmittelbar einsetzt.

Die Herstellung der Polyurethane erfolgt in der Regel durch Umsetzung von Diisocyanaten mit Verbindungen mit mindestens zwei mit Isocyanatgruppen reaktiven Wasserstoffatomen, vorzugsweise difunktionellen Alkoholen, besonders bevorzugt mit den erfindungsgemäß herstellbaren Polyetherolen.

Als Diisocyanate werden übliche aromatische, aliphatische und/ oder cycloaliphatische Diisocyanate, beispielsweise Diphenyl-Methan-Diisocyanat (MDI), Toluylendiisocyanat (TDI), Tri-, Tetra-, Penta-, Hexa-, Hepta- und/oder Oktamethylendiisocyanat, 2-Methylpentamethylen-diisocyanat-1,5, 2-Ethyl-butylen-diisocyanat-1,4, 1-Isocyanato-3,3,5-trimethyl-5-isocyanatomethyl-cyclohexan (Isophoron-diisocyanat, IPDI), 1,4- und/oder 1,3-Bis(isocyanatomethyl)cyclohexan (HXDI), 1,4-Cyclohexan-diisocyanat, 1-Methyl-2,4- und/oder -2,6-cyclohexan-diisocyanat, 4,4'-, 2,4'- und/oder 2,2'-Dicyclohexylmethan-diisocyanat eingesetzt.

Als gegenüber Isocyanaten reaktive Verbindungen werden, wie beschrieben, bevorzugt die erfindungsgemäßen Polyetheralkohole eingesetzt. In Gemisch mit diesen können allgemein bekannte Polyhydroxylverbindungen mit Molekulargewichten von 500 bis 8000 g/ mol, bevorzugt 600 bis 6000 g/ mol, insbesondere 800 bis 4000 g/ mol, und bevorzugt einer mittleren Funktionalität von 1,8 bis 2,6, bevorzugt 1,9 bis 2,2, insbesondere 2 eingesetzt werden, beispielsweise Polyesteralkohole, Polyetheralkohole und/oder Polycarbonatdiole.

Zu den gegenüber Isocyanaten reaktiven Verbindungen gehören auch die Kettenverlängerungsmittel. Als Kettenverlängerungsmittel können allgemein bekannte insbesondere zweifunktionelle Verbindungen eingesetzt werden, beispielsweise Diamine und/oder Alkandiole mit 2 bis 10 C-Atomen im Alkylenrest, insbesondere Ethylenglykol und/oder Butandiol-1,4, und/ oder Hexandiol und/ oder Di- und/oder Tri-oxyalkylenglykole mit 3 bis 8 Kohlenstoffatomen im Oxyalkylenrest, bevorzugt entsprechende Oligo-Polyoxypropylenglykole, wobei auch Mischungen der Kettenverlängerer eingesetzt werden können. Als Kettenverlängerer können auch 1,4-Bis-(hydroxymethyl)-benzol (1,4-BHMB), 1,4-Bis-(hydroxyethyl)-benzol (1,4-BHEB) oder 1,4-Bis-(2-hydroxyethoxy)-benzol (1,4-HQEE) zum Einsatz kommen. Bevorzugt werden als Kettenverlängerer Ethylenglykol und Hexandiol, besonders bevorzugt Ethylenglykol.

Üblicherweise werden Katalysatoren eingesetzt, welche die Reaktion zwischen den NCO-Gruppen der Diisocyanate und den Hydroxylgruppen der Aufbaukomponenten beschleunigen, beispielsweise tertiäre Amine, wie Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan und ähnliche sowie insbesondere organische Metallverbindungen wie Titansäureester, Eisenverbindungen wie z.B. Eisen-(III)-acetylacetonat, Zinnverbindungen, wie Zinndiacetat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,0001 bis 0,1 Gew.-Teilen pro 100 Gew.-Teile Polyhydroxylverbindung eingesetzt.

Neben Katalysatoren können den Aufbaukomponenten auch übliche Hilfsstoffe hinzugefügt werden. Genannt seien beispielsweise oberflächenaktive Substanzen, Flammschutzmittel, Keimbildungsmittel, Gleit- und Entformungshilfen, Farbstoffe und Pigmente, Inhibitoren, Stabilisatoren gegen Hydrolyse, Licht, Hitze, Oxidation oder Verfärbung, Schutzmittel gegen mikrobiellen Abbau, anorganische und/ oder organische Füllstoffe, Verstärkungsmittel und Weichmacher.

Nähere Angaben über die oben genannten Hilfsmittel- und Zusatzstoffe sind der Fachliteratur zu entnehmen, zum Beispiel aus "Plastics Additive Handbook", 5th Edition, H. Zweifel, ed, Hanser Publishers, München, 2001, H. Saunders und K. C. Frisch "High Polymers", Band XVI, Polyurethane, Teil 1 und 2, Verlag Interscience Publishers 1962 and 1964, Taschenbuch für Kunststoff-Additive von R. Gachter und H. Muller (Hanser Verlag München 1990) oder DE-A29 01 774.

Apparaturen zur Herstellung von Polyurethanen sind dem Fachmann bekannt; siehe zum Beispiel Kunststoffhandbuch, Band VII, Polyurethane, Carl- Hanser-Verlag, München 1. Auflage 1966, herausgegeben von Dr. R Vieweg und Dr. A. Höchtlen, sowie 2. Auflage 1983 und die 3. neubearbeitete Auflage 1993, herausgegeben von Dr. G. Oertel.

Es wird hier, wie erwähnt, auch die Verwendung eines nach dem erfindungsgemäßen Verfahren hergestellten Polyetherpolyols zur Produktion von Polyurethanen beschrieben (im Folgenden auch als PUR bezeichnet), insbesondere von PUR-Weichschaum, PUR-Hartschaum, Polyisocyanurat (PIR)-Hartschaum, zellulären oder nicht zellulären PUR-Materialien oder Polyurethandispersionen. Die wie oben beschriebenen Polyurethane können u. a. zur Herstellung von Matratzen, Schuhsohlen, Dichtungen, Schläuchen, Fußböden, Profilen, Lacken, Klebstoffen, Dichtstoffen, Skiern, Autositzen, Laufbahnen in Stadien, Instrumententafeln, diversen Formkörpern, Vergussmassen, Folien, Fasern, Non-Woven und/oder Gussböden verwendet werden.

### Beispiele

Im Folgenden werden einige Beispiele zur Veranschaulichung der Erfindung angeführt. Dabei dienen die Beispiele nur illustrativen Zwecken und sollen keinesfalls den Umfang der Ansprüche einschränken.

### Bsp. 1 (nicht erfindungsgemäß)

25,0 g Diethylenglykol und 0,42 g 1,3-Dimethylimidazolium-2-carboxylat wurden in einem 300 ml Reaktor vorgelegt. Anschließend wurde der Kessel mit Stickstoff inertisiert. Der Kessel wurde auf 115°C erhitzt und 62,37 g Ethylenoxid wurden zudosiert. Nach einer Abreaktionszeit von 3 h wurde für 30 Minuten unter vollem Vakuum evakuiert und anschließend auf 25°C abgekühlt. Es wurden 78,4 g Produkt erhalten.
OH-Zahl: 328,6 mg KOH/g
Viskosität (25°C): 62,7 mPas

### Bsp. 2:

18,42 g Diethylenglykol und 1,37 g 1,3-Dimethylimidazolium-2-carboxylat wurden in einem 300 ml Reaktor vorgelegt. Anschließend wurde der Kessel mit Stickstoff inertisiert. Der Kessel wurde auf 115°C erhitzt und 201,58 g Propylenoxid wurden gegen eine Druckbremse von 7,6 bar zudosiert. Die Dosierzeit betrug 8 Stunden 10 Minuten. Nach einer Abreaktionszeit von 4 h wurde für 30 Minuten unter vollem Vakuum evakuiert und anschließend auf 25°C abgekühlt. Es wurden 200,14 g Produkt erhalten.
OH-Zahl: 106,5 mg KOH/g
Viskosität (25°C): 140 mPas
GPC Polydispersität: 1,098

### Bsp. 3:

18,42 g Diethylenglykol und 1,00 g 1-Butyl-3-methylimidazolium-2-carboxylat wurden in einem 300 ml Reaktor vorgelegt. Anschließend wurde der Kessel mit Stickstoff inertisiert. Der Kessel wurde auf 115°C erhitzt und 201,58 g Propylenoxid wurden gegen eine Druckbremse von 7,6 bar zudosiert. Die Dosierzeit betrug 10 Stunden 15 Minuten. Nach einer Abreaktionszeit von 4 h wurde für 30 Minuten unter vollem Vakuum evakuiert und anschließend auf 25°C abgekühlt. Es wurden 200,14 g Produkt erhalten.
OH-Zahl: 88,1 mg KOH/g
Viskosität (25°C): 137 mPas

### Bsp. 4:

18,42 g Diethylenglykol und 0,85 g 1-Ethyl-3-methylimidazolium-2-carboxylat wurden in einem 300 ml Reaktor vorgelegt. Anschließend wurde der Kessel mit Stickstoff inertisiert. Der Kessel wurde auf 115°C erhitzt und 201,58 g Propylenoxid wurden gegen eine Druckbremse von 7,6 bar zudosiert. Die Dosierzeit betrug 8 Stunden 20 Minuten. Nach einer Abreaktionszeit von 4 h wurde für 30 Minuten unter vollem Vakuum evakuiert und anschließend auf 25°C abgekühlt. Es wurden 200,14 g Produkt erhalten.
OH-Zahl: 89 mg KOH/g
Viskosität (25°C): 126 mPas

### Bsp. 5:

18,42 g Diethylenglykol und 1,3 g Di-tert-butyl-imidazolium-2-carboxylat wurden in einem 300 ml Reaktor vorgelegt. Anschließend wurde der Kessel mit Stickstoff inertisiert. Der Kessel wurde auf 115°C erhitzt und 201,58 g Propylenoxid wurden gegen eine Druckbremse von 7,6 bar zudosiert. Nach 6 Stunden überschritt der Druck 7,6 bar und fiel auch nach einem Dosierstop nicht mehr ab. Daraufhin wurde die Reaktion abgebrochen. Es wurde 30 Minuten unter vollem Vakuum evakuiert und anschließend auf 25°C abgekühlt. Es wurden 91,14 g Produkt erhalten.
OH-Zahl: 223 mg KOH/g
Viskosität (25°C): 51 mPas

### Bsp. 6 (nicht erfindungsgemäß):

25,0 g Diethylenglykol und 0,42 g 1,3-Dimethylimidazolium-2-carboxylat wurden in einem 300 ml Reaktor vorgelegt. Anschließend wurde der Kessel mit Stickstoff inertisiert. Der Kessel wurde auf 115°C erhitzt und 62,27 g Ethylenoxid wurden zudosiert. Nach einer Abreaktionszeit von 2 h wurde für 30 Minuten unter vollem Vakuum evakuiert und anschließend auf 25°C abgekühlt. Es wurden 83,1 g Produkt erhalten.
OH-Zahl: 318 mg KOH/g
Viskosität (25°C): 62,7 mPas

### Bsp. 7 (nicht erfindunsgemäß):

135,00 g eines Diethylenglykol gestarteten mit 1,3-Dimethylimidazolium-2-carboxylat katalysierten Polypropylenglykols mit einer Hydroxyzahl von 108 mg KOH/g wurden in einen 300 ml Reaktor gefüllt. 0,77 g 1,3-Dimethylimidazolium-2-carboxylat wurden zugegeben und der Reaktor wurde auf 100°C erwärmt. Nach einer Vakuumtrocknung wurden 12,5 g Ethylenoxid zudosiert. Nach einer Abreaktionszeit von 3 h wurden für 30 Minuten unter vollem Vakuum evakuiert und anschließend auf 25°C abgekühlt. Es wurden 144 g eines klaren Produkts erhalten.
OH-Zahl: 96 mg KOH/g
Viskosität (25°C): 128 mPas

### Bsp. 8:

24,41 g Diethylenglykol, 20,56 g 1,1,3,3,5,5-Hexamethyltricyclosiloxan und 1,73 g 1,3-Dimethylimidazolium-2-carboxylat wurden in einem 300 ml Reaktor vorgelegt. Anschließend wurde der Kessel mit Stickstoff inertisiert. Der Kessel wurde auf 110°C erhitzt und 185,0 g Propylenoxid wurden zudosiert. Nach einer Abreaktionszeit von 3 h wurde für 30 Minuten unter vollem Vakuum evakuiert und anschließend auf 25°C abgekühlt. Es wurden 220,3 g Produkt erhalten.
OH-Zahl: 110 mg KOH/g
Viskosität (25°C): 167 mPas

### Bsp. 9:

24,40 g Diethylenglykol, 61,68 g Caprolacton und 1,73 g 1,3-Dimethylimidazolium-2-carboxylat wurden in einem 300 ml Reaktor vorgelegt. Anschließend wurde der Kessel mit Stickstoff inertisiert. Der Kessel wurde auf 110°C erhitzt und 143,91 g Propylenoxid wurden zudosiert. Nach einer Abreaktionszeit von 3 h wurde für 30 Minuten unter vollem Vakuum evakuiert und anschließend auf 25°C abgekühlt. Es wurden 202,1 g Produkt erhalten.
OH-Zahl: 129 mg KOH/g
Viskosität (25°C): 281 mPas

Die hohen Druckwerte zeigen eine Abreaktion des PO an.

Somit wird durch das erfindungsgemäße Verfahren eine vorteilhafte Alternative zu konventionellen, KOH- oder DMC-katalysierten Verfahren bereitgestellt.

Die neuen Katalysatoren sind hoch aktiv, wodurch nur eine geringe Menge des Katalysators benötigt wird, und es kann ein EO-Endcapping von Polyetherolen substituierter Alkylenoxide, und somit also der Aufbau von Polyetherol-Blockstrukturen, durchgeführt werden. Auch eine Copolymerisation, z. B. mit Lactonen, ist möglich.

Nebenreaktionen beim Einsatz von PO werden weitgehend vermieden, und durch die gegenüber der KOH-Katalyse niedrigere Viskosität des Reaktionsgemischs kann eine bessere Wärmeabfuhr erreicht werden.

Zudem ist keine zeitraubende Aufarbeitung am Ende der Reaktion erforderlich, wie sie bei KOH-katalysierten Verfahren die Regel ist.

Der Einsatz von Aminen als Starter oder Costarter ist möglich; und schließlich kann der erfindungsgemäße Katalysator bei weiteren Reaktionen, z. B. der PU-Herstellung, weiter verwendet werden.

Die erfindungsgemäß herstellbaren Polyetherole können zudem vorteilhaft bei der Herstellung von Polyurethanen eingesetzt werden.

## Patentansprüche

1. Verfahren zur Herstellung von Polyetherolen durch katalytische ringöffnende Polymerisation von Propylenoxid mit wenigstens einer wenigstens difunktionellen Verbindung, die mit Alkylenoxiden reaktiv ist, wobei mindestens ein N-heterocyclisches Carben als Katalysator zum Einsatz kommt.

2. Verfahren zur Herstellung von Polyetherolen nach einem der vorangehenden Ansprüche, wobei die wenigstens difunktionellen Verbindungen, die mit Alkylenoxiden reaktiv sind, ausgewählt sind aus der Gruppe umfassend Polyole, insbesondere Glycerin, Ethylenglycol, Diethylenglycol, Propylenglycol, Dipropylenglycol, Pentaerythrit, Sorbitol, Saccharose, C₁- bis C₁₈-Diole, Rizinusöl, epoxydierte und ringgeöffnete Fettsäuren, Trimethylopropan, Zuckerverbindungen wie beispielsweise Glucose, Sorbit, Mannit und Saccharose, mehrwertige Phenole, Resole, wie z. B. oligomere Kondensationsprodukte aus Phenol und Formaldehyd und Mannich-Kondensate aus Phenolen, Formaldehyd, Dialkanolaminen, Melamin, sowie Mischungen aus mindestens zwei der aufgeführten Verbindungen.

3. Verfahren zur Herstellung von Polyetherolen nach einem der vorangehenden Ansprüche, wobei das N-heterocyclische Carben ausgewählt ist aus der Gruppe umfassend 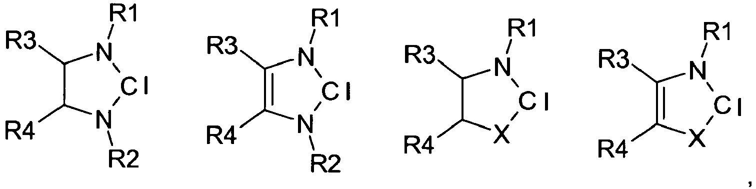 und 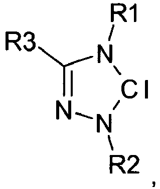 wobei X ausgewählt ist aus der Gruppe umfassend O und S; R1 ausgewählt ist aus der Gruppe umfassend Alkyl, Aryl; R2, falls vorhanden, ausgewählt ist aus der Gruppe umfassend Alkyl, Aryl; R3 und R4 jeweils ausgewählt sind aus der Gruppe umfassend H, Alkyl, Aryl; wobei auch Ringschlüsse zwischen R1 und R3, R3 und R4 sowie R4 und R2 möglich sind.

4. Verfahren zur Herstellung von Polyetherolen nach einem der vorangehenden Ansprüche, wobei das N-heterocyclische Carben 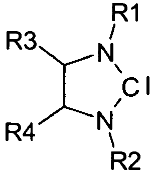 ist, wobei R1, R2, R3 und R4 wie oben definiert sind.

5. Verfahren zur Herstellung von Polyetherolen nach einem der vorangehenden Ansprüche, wobei das N-heterocyclische Carben 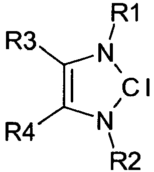 ist, wobei R1, R2, R3 und R4 wie oben definiert sind.

6. Verfahren zur Herstellung von Polyetherolen nach einem der vorangehenden Ansprüche, wobei das N-heterocyclische Carben 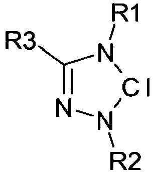 ist, wobei R1, R2, R3 und R4 wie oben definiert sind.

7. Verfahren zur Herstellung von Polyetherolen nach einem der Ansprüche 4 bis 6, wobei wenigstens einer der beiden Reste R1 und R2 eine primäre Alkylgruppe ist.

8. Verfahren zur Herstellung von Polyetherolen nach einem der Ansprüche 4 bis 7, wobei wenigstens einer der beiden Reste R1 und R2 eine sekundäre Alkylgruppe ist.

9. Verfahren zur Herstellung von Polyetherolen nach einem der Ansprüche 4 bis 7, wobei beide Reste R1 und R2 jeweils primäre Alkylgruppen sind.

10. Verfahren zur Herstellung von Polyetherolen gemäß einem der vorangehenden 10) Ansprüche, wobei das Polyetherol mit einem EO-Endcap versehen wird.

## Claims

1. A process for producing polyetherols via catalytic ring-opening polymerization of propylene oxide with at least one at least difunctional compound which is reactive toward alkylene oxides, where at least one N-heterocyclic carbene is used as catalyst.

2. The process for producing polyetherols, according to any of the preceding claims, where the at least difunctional compounds which are reactive toward alkylene oxides have been selected from the group comprising polyols, in particular glycerol, ethylene glycol, diethylene glycol, propylene glycol, dipropylene glycol, pentaerythritol, sorbitol, sucrose, C₁-C₁₈ diols, castor oil, epoxidized and ring-opened fatty acids, trimethylolpropane, sugar compounds, e.g. glucose, sorbitol, mannitol, and sucrose, polyfunctional phenols, resols, e.g. oligomeric condensates of phenol and formaldehyde, and Mannich condensates of phenols, of formaldehyde, and of dialkanolamines, and melamine, and also mixtures of at least two of the compounds listed.

3. The process for producing polyetherols, according to any of the preceding claims, where the N-heterocyclic carbene has been selected from the group comprising 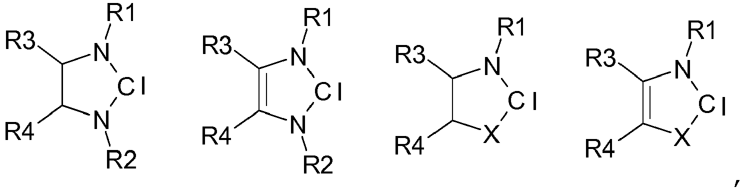 and 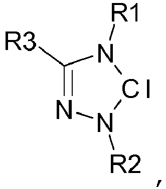 where X has been selected from the group comprising 0 and S; R1 has been selected from the group comprising alkyl, aryl; R2, if present, has been selected from the group comprising alkyl, aryl; each of R3 and R4 has been selected from the group comprising H, alkyl, aryl; and ring closures between R1 and R3, R3 and R4, and also R4 and R2, are possible.

4. The process for producing polyetherols, according to any of the preceding claims, where the N-heterocyclic carbene is 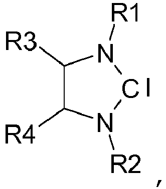 where the definitions of R1, R2, R3, and R4 are as above.

5. The process for producing polyetherols, according to any of the preceding claims, where the N-heterocyclic carbene is 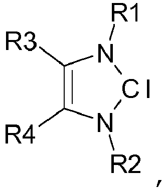 where the definitions of R1, R2, R3, and R4 are as above.

6. The process for producing polyetherols, according to any of the preceding claims, where the N-heterocyclic carbene is 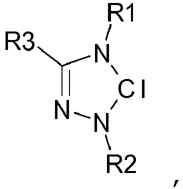 where the definitions of R1, R2, R3 and R4 are as above.

7. The process for producing polyetherols, according to any of claims 4 to 6, where at least one of the two radicals R1 and R2 is a primary alkyl group.

8. The process for producing polyetherols, according to any of claims 4 to 7, where at least one of the two radicals R1 and R2 is a secondary alkyl group.

9. The process for producing polyetherols, according to any of claims 4 to 7, where both radicals R1 and R2 are primary alkyl groups.

10. The process for producing polyetherols, according to any of the preceding claims, where the polyetherol is provided with an EO endcap.

## Revendications

1. Procédé pour la préparation de polyétherols par polymérisation catalytique, avec ouverture de cycle, d'oxyde de propylène avec au moins un composé bifonctionnel qui est réactif avec des oxydes d'alkylène, en utilisant comme catalyseur au moins un carbène N-hétérocyclique.

2. Procédé pour la préparation de polyétherols selon l'une quelconque des revendications précédentes, dans lequel les composés au moins bifonctionnels qui sont réactifs avec des oxydes d'alkylène sont choisis dans le groupe comprenant des polyols, en particulier le glycérol, l'éthylèneglycol, le diéthylèneglycol, le propylèneglycol, le dipropylèneglycol, le pentaérythritol, le sorbitol, le saccharose, des diols en C₁-C₁₈, l'huile de ricin, des acides gras époxydés et à cycle ouvert, le triméthylolpropane, des composés glucidiques comme par exemple le glucose, le sorbitol, le mannitol et le saccharose, des phénols plurivalents, des résols, comme par exemple des produits oligomères de condensation de phénol et formaldéhyde et des produits de condensation de Mannich de phénols, formaldéhyde, dialcanolamines, mélamine, ainsi que des mélanges d'au moins deux des composés indiqués.

3. Procédé pour la préparation de polyétherols selon l'une quelconque des revendications précédentes, dans lequel le carbène N-hétérocyclique est choisi dans le groupe comprenant 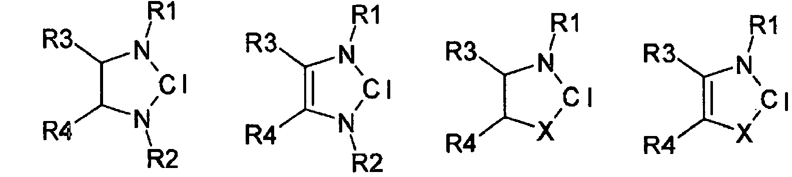 et 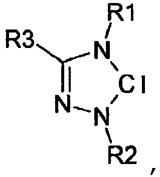 X étant choisi dans le groupe comprenant 0 et S ; R1 est choisi dans le groupe comprenant alkyle, aryle ; R2, s'il est présent, étant choisi dans le groupe comprenant alkyle, aryle ; R3 et R4 étant choisis chacun dans le groupe comprenant H, alkyle, aryle ; des cyclisations entre R1 et R3, R3 et R4 ainsi que R4 et R2 étant également possibles.

4. Procédé pour la préparation de polyétherols selon l'une quelconque des revendications précédentes, dans lequel le carbène N-hétérocyclique est 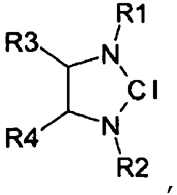 R1, R2, R3 et R4 étant tels que définis plus haut.

5. Procédé pour la préparation de polyétherols selon l'une quelconque des revendications précédentes, dans lequel le carbène N-hétérocyclique est 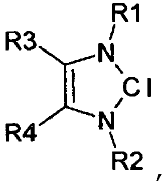 R1, R2, R3 et R4 étant tels que définis plus haut.

6. Procédé pour la préparation de polyétherols selon l'une quelconque des revendications précédentes, dans lequel le carbène N-hétérocyclique est 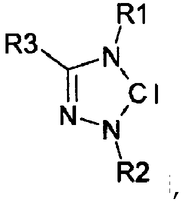 R1, R2, R3 et R4 étant tels que définis plus haut.

7. Procédé pour la préparation de polyétherols selon l'une quelconque des revendications 4 à 6, dans lequel au moins l'un des deux radicaux R1 et R2 est un groupe alkyle primaire.

8. Procédé pour la préparation de polyétherols selon l'une quelconque des revendications 4 à 7, dans lequel au moins l'un des deux radicaux R1 et R2 est un groupe alkyle secondaire.

9. Procédé pour la préparation de polyétherols selon l'une quelconque des revendications 4 à 7, dans lequel les deux radicaux R1 et R2 sont l'un et l'autre des groupes alkyle primaires.

10. Procédé pour la préparation de polyétherols selon l'une quelconque des revendications précédentes, dans lequel le polyétherol est muni d'un groupe de coiffage terminal EO.
